# DEMANDE DE BREVET EUROPEEN

(11) **EP 1 724 145 A1**
(43) Date de publication de la demande: **22.11.2006**
(21) Numéro de dépôt: 06290787.8
(22) Date de dépôt: 16.05.2006
(51) Int. Cl.: B60K 15/05, B60K 15/04

(54) **Dispositif anti siphonnage carburant de réservoir de véhicule**

(30) Priorité: 16.05.2005 FR 0504906
(71) Demandeur: Fourment, Thierry, 95200 Sarcelles (FR)
(72) Inventeur: Fourment, Thierry, 95200 Sarcelles (FR)

(57) **Abrégé**

L'invention concerne un dispositif destiné à être vissé sur la goulotte d'un réservoir de carburant, pour les véhicules poids lourds notamment, tout en pouvant récupérer le bouchon d'origine, empêchant le vol, et le siphonage du carburant.

Le dispositif est constitué d'un corps (2) sur lequel le filetage (7) permet de le positionner sur la goulotte d'un réservoir, et d'un taraudage (5) qui permet de repositionner le bouchon d'origine ; la crépine (3) avec son fond (4) évite le siphonage du contenu du réservoir.

Le dispositif selon l'invention est particulièrement destiné à la protection de réservoirs à goulotte à vis.

## Description

La présente invention concerne un dispositif anti-siphonage et antivol de carburant pour véhicule, poids lourds notamment, à monter facilement sur les réservoirs dans leur partie haute et offrant une protection au niveau supérieur du remplissage du réservoir en carburant.

La protection des réservoirs de carburant des véhicules poids lourds est habituellement effectuée à l'aide d'un bouchon antivol vissé sur une goulotte de remplissage dont le diamètre varie selon les modèles de 50 mm à 125 mm. Son blocage par clef met la partie supérieure du bouchon en libre rotation ou "roue libre". Cependant, ce principe de protection rend le vol du carburant facile et fréquent. En effet, l'introduction en force ou forte d'une lame de type tournevis dans la fente peut bloquer le système "roue libre" et permettre le dévissage du bouchon sans la clef et donc permettre le siphonage du carburant.

On connaît par ailleurs par US 3 951 297 et US 1 512 065 des dispositifs anti-siphonages pour réservoir dont la goulotte de réservoir est pourvue d'un filetage externe, et permettant l'utilisation du bouchon d'origine sur le dispositif. Néanmoins, ces dispositifs impliquent une liaison de matière avec la goulotte qui rehausse le dispositif. Ils ne permettent pas de réduire la hauteur de montage du bouchon sur le dispositif, laquelle est recherchée, notamment sur les véhicules poids lourds pour permettre la rotation des remorques sans toucher le bouchon du réservoir.

Le dispositif selon l'invention permet de remédier à ces inconvénients.

Il est en effet proposé selon l'invention un dispositif anti-siphonage adaptable sur un réservoir pourvu d'une goulotte tubulaire de remplissage au niveau supérieur, elle-même comportant un filetage interne pour la mise en prise serrée d'un bouchon ou capuchon de fermeture, le dispositif étant apte à permettre la rotation libre dudit bouchon au moyen d'un système de verrouillage-déverrouillage à clef.

A cet effet, l'invention a pour objet un dispositif anti-siphonage de carburant apte à être appliqué sur la goulotte d'un réservoir de carburant, pourvue d'un bouchon de fermeture, la goulotte étant pourvue d'un filetage interne coopérant avec le bouchon de fermeture, ledit dispositif comprenant un corps pourvu d'une jupe ou "crépine" percée de trous et munie d'un fond, à un diamètre inférieur à celui de la goulotte, caractérisé en ce que ledit corps est pourvu à un niveau supérieur adjacent à la jupe d'un filetage externe apte à s'engager en vissage sur le filetage interne de la goulotte, et à y être verrouillé en prise, et ledit corps étant pourvu à un niveau supérieur d'une partie de réception du bouchon de fermeture, pourvue d'un filetage interne pour la mise en prise serrée du bouchon de fermeture, avec mise en rotation libre du bouchon au moyen d'un système de verrouillage-déverrouilage à clef, ledit corps comportant un espace de dégagement interne.

Ce dégagement permet ainsi l'enfoncement du bouchon de fermeture à l'intérieur du dispositif, de sorte que la hauteur de l'ensemble bouchon-dispositif est réduite.

En outre, ledit corps comporte sur une gorge à son bord un joint externe apte à permettre l'application étanche du dispositif, à savoir son application de façon étanche sur la goulotte du réservoir.

Il résulte de cette disposition que le dispositif anti-siphonage selon l'invention se monte aisément par vissage sur la goulotte d'un réservoir à équiper, en utilisant le même bouchon de fermeture que celui de la goulotte du réservoir, et que la jupe percée empêche par son fond l'accès de tout tube de siphonage du carburant à l'intérieur du réservoir et que celle-ci autorise de plus par ses trous le passage du carburant lors du remplissage du réservoir.

Cette jupe comporte des trous de diamètre variable, régulièrement espacés ou non, par exemple de 4 à 15 mm de diamètre, un trou sur deux à la base pouvant en outre être de diamètre supérieur pour un meilleur passage du carburant au remplissage du réservoir.

Le fond de la jupe peut être formé avec un angle rentrant dans la jupe de façon à briser le jet de remplissage dans le réservoir et permettre l'écoulement sans refoulement, de la jupe dans le réservoir. Ce fond peut être une plaque ovale percée de trous et formée en angle.

De préférence, le filetage externe du dispositif est identique au filetage du bouchon de fermeture d'origine.

De préférence, le filetage interne est identique au filetage de la goulotte du réservoir d'origine.

De préférence, le fond de la crépine est une plaque ovale formée en angle.

Les dessins annexés illustrent l'invention :
- La figure 1 représente en coupe le dispositif anti-siphonage de l'invention,

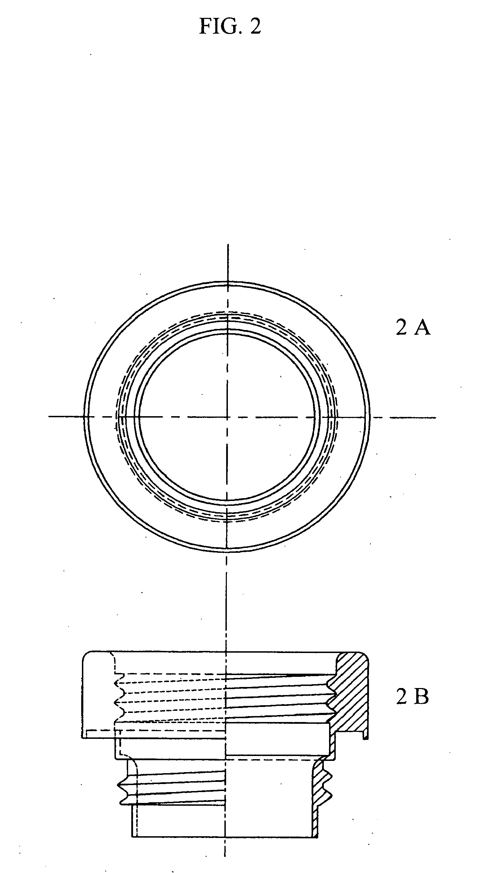

- La figure 2 représente en coupe le corps dispositif,

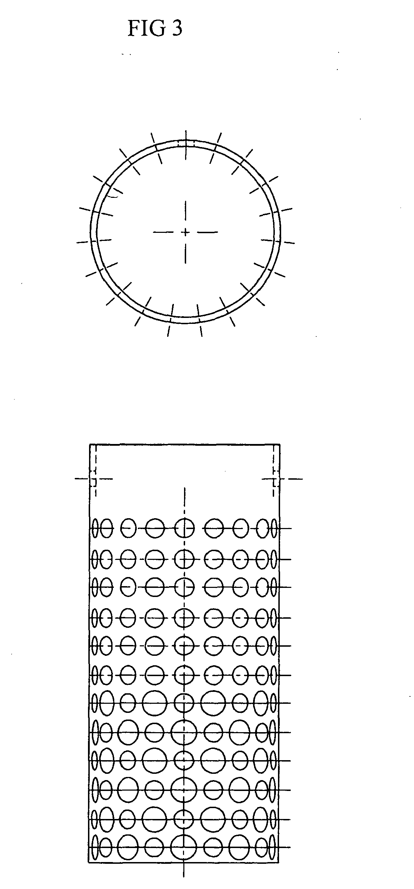

- La figure 3 représente en coupe la crépine,

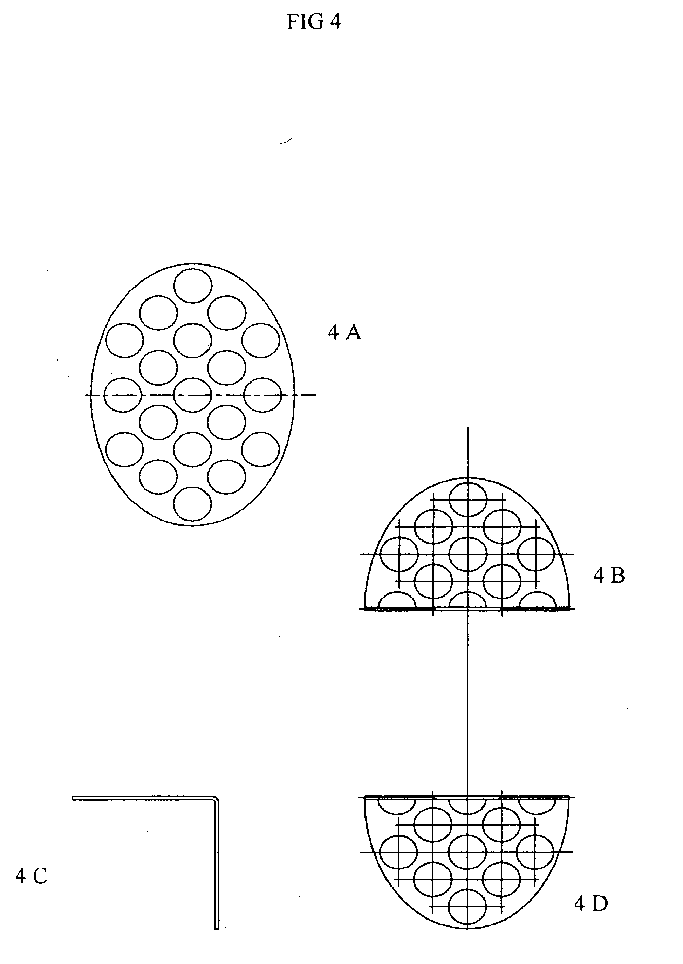

- La figure 4 représente en coupe le fond de crépine.

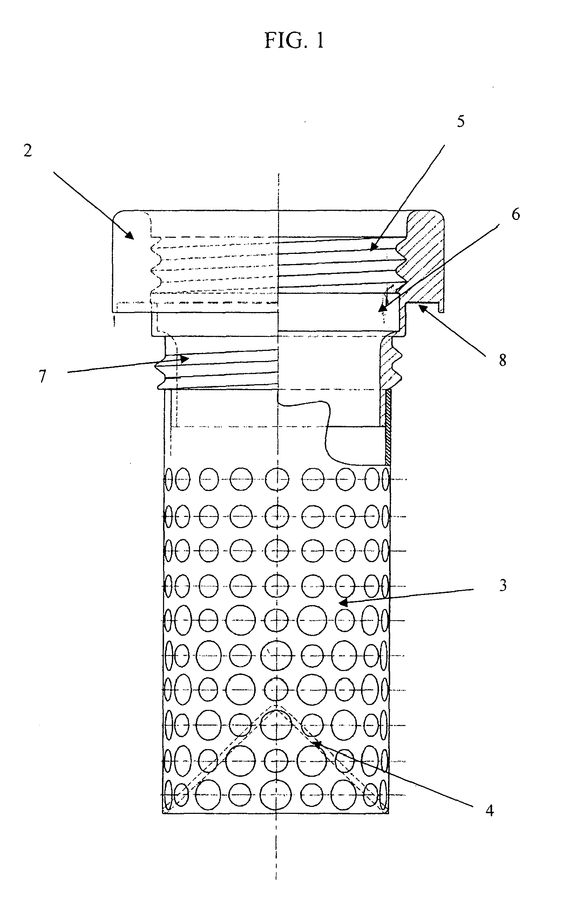

En référence aux figures, un dispositif anti-siphonage selon l'invention comporte un dispositif (Fig.1) à visser sur la goulotte d'origine du réservoir (non représentée) dont le diamètre varie de 50 à 125 mm selon les types de réservoirs. Le dispositif comporte un corps 2 qui comprend un filetage mâle 7 qui correspond au filetage du bouchon d'origine du réservoir à équiper et un taraudage 5 qui correspond au taraudage de la goulotte du réservoir d'origine.

Sur le bas du corps, est positionnée une jupe percée ou crépine 3 qui est un tube d'épaisseur variant de 0.5 à 3 mm (5/ 10e à 30/10e) perforé de trous de 4 mm à 15 mm de diamètre et régulièrement espacés.

Dans la partie basse de la crépine 3, un trou sur deux est de diamètre supérieur, ce qui permet un meilleur passage du carburant et la base comporte une plaque ovale 4 percée de trous et formée en angle rentrant dans le tube et soudée, constituant le fond de la crépine pour briser le jet et permettre l'écoulement du carburant sans refouler dans la crépine, cette crépine étant maintenue sur le corps 2 par des points de soudure.

Ainsi, le dispositif comprend un moyen de positionnement sur un réservoir de carburant au niveau de sa goulotte de remplissage, qui est constitué dans l'exemple décrit par le filetage 7, identique au filetage du bouchon de fermeture d'origine.

Le dispositif comprend également un moyen pour positionner le bouchon de fermeture d'origine, qui est constitué dans l'exemple par le taraudage 5 identique au taraudage de la goulotte du réservoir d'origine.

Le dispositif comprend enfin un moyen empêchant la pénétration d'un tuyau, constitué par exemple par la crépine 3 dont la base comporte une plaque ovale formée en angle 4.

De plus, l'étanchéité du dispositif sur le réservoir est assurée par un joint plat (non représenté) positionné dans une gorge 8, et s'appliquant sur la goulotte.

Le dispositif est conçu de manière à rehausser au minimum le réservoir à équiper avec son bouchon lors de la mise en place du bouchon de fermeture. On peut en effet apercevoir un dégagement 6 qui permet au bouchon d'origine de s'enfoncer le plus possible pour éviter de rehausser trop le réservoir à équiper. Comme on le voit sur la figure 1, ce dégagement 6, situé au dessus du filetage 7, permet de recevoir le bouchon avec une partie en enfoncement à l'intérieur de la goulotte.

Ainsi, lors de son positionnement, le corps du bouchon entre dans le dégagement 6.

Lors de la mise en place du dispositif anti-siphonage sur le réservoir à équiper, il faudra encoller le filetage mâle 7 avec de la colle frein de filet et le visser sur la goulotte du réservoir jusqu'à l'application étanche par le joint.

La fermeture du réservoir par son bouchon d'origine se fera comme à l'origine.

Ce dispositif intéresse tous les véhicules poids lourds sachant qu'un réservoir contient de 400 à 900 litres.

## Revendications

1. Dispositif anti-siphonage de carburant apte à être appliqué sur la goulotte d'un réservoir de carburant, pourvue d'un bouchon de fermeture, la goulotte étant pourvue d'un filetage interne coopérant avec le bouchon de fermeture, ledit dispositif comprenant un corps (2) pourvu d'une jupe ou "crépine" (3) percée de trous et munie d'un fond (4), à un diamètre inférieur à celui de la goulotte, **caractérisé en ce que** ledit corps (2) est pourvu à un niveau supérieur adjacent à la jupe (3) d'un filetage externe (7) apte à s'engager en vissage sur le filetage interne de la goulotte, et à y être verrouillé en prise, et ledit corps (2) étant pourvu à un niveau supérieur d'une partie de réception du bouchon de fermeture, pourvue d'un filetage interne (5) pour la mise en prise serrée du bouchon de fermeture, avec mise en rotation libre du bouchon au moyen d'un système de verrouillage-déverrouilage à clef, ledit corps (2) comportant un espace de dégagement interne (6).

2. Dispositif anti-siphonage de carburant selon la revendication 1, **caractérisé en ce que** ledit corps (2) comporte à son bord un joint externe positionné dans une gorge (8) apte à permettre l'application étanche du dispositif sur la goulotte du réservoir.

3. Dispositif anti-siphonage selon la revendication 1 ou 2,
**caractérisé en ce que** ladite jupe (3) comporte des trous de diamètre variable, régulièrement espacés ou non, un trou sur deux à la base pouvant en outre être de diamètre supérieur pour un meilleur passage du carburant au remplissage du réservoir.

4. Dispositif anti-siphonage selon une des revendications précédentes, **caractérisé en ce que** le fond (4) de la jupe (3) est formé avec un angle rentrant dans la jupe (3) de façon à briser le jet de remplissage dans le réservoir et permettre l'écoulement du carburant sans refoulement dans la jupe (3).

5. Dispositif anti-siphonage selon la revendication 4,
**caractérisé en ce que** ledit fond (4) de la jupe (3) est une plaque ovale percée de trous et formée en angle.

6. Dispositif anti-siphonage selon l'une des revendications 1 à 5,
**caractérisé en ce que** le filetage (7) est identique au filetage du bouchon de fermeture d'origine.

7. Dispositif anti-siphonage selon l'une des revendications 1 à 6,
**caractérisé en ce que** le filetage interne (5) est identique au filetage de la goulotte du réservoir d'origine.

8. Dispositif anti-siphonage selon l'une des revendications 1 à 7,
**caractérisé en ce que** le fond (4) de la crépine (3) est une plaque ovale formée en angle.
